# EUROPÄISCHE PATENTSCHRIFT

(11) **EP 1 705 050 B1**
(45) Veröffentlichungstag und Bekanntmachung des Hinweises auf die Patenterteilung: **27.10.2010**
(21) Anmeldenummer: 06110396.6
(22) Anmeldetag: 24.02.2006
(51) Int. Cl.: B60K 15/01, F16L 9/19, F02M 55/02

(54) **Verwendung eines Leitungssystems für Fluide mit flüchtigen Bestandteilen**
Use of a conduit system for fluids including volatile components
Utilisation d'un système de tubulure pour fluides à composants volatils

(30) Priorität: 24.03.2005 CH 5822005
(43) Veröffentlichungstag der Anmeldung: 27.09.2006
(73) Patentinhaber: EMS-CHEMIE AG, 7013 Domat-Ems (CH)
(72) Erfinder: Stolarz, Alex, 7402, Bonaduz (CH); Kettl, Ralph, 7417, Paspels (CH); Sturzel, André, 7206, Igis (CH)
(74) Vertreter: OK pat AG

(56) Entgegenhaltungen:
- WO-A-94/10491
- FR-A- 2 697 892
- GB-A- 2 290 848

## Beschreibung

Die Erfindung betrifft laut dem Oberbegriff des Anspruchs 1 die Verwendung eines Leitungssystems für Fluide mit flüchtigen Bestandteilen. Dabei umfasst das Leitungssystem zumindest eine Fluidleitung, die ausgewählt ist aus einer Gruppe, die aus einer Vorlaufleitung und einer Rücklaufleitung besteht, wobei die zumindest eine Fluidleitung je über einen separaten Einlass und Auslass verfügt; und eine weitere Fluidleitung, welche die zumindest eine Fluidleitung im Wesentlichen vollständig umschliesst. Dabei erstrecken sich diese Fluidleitungen gemeinsam über einen Abschnitt A des Leitungssystems einander eng anliegend; sie sind aber durch eine erste Leitungswand über die ganze Länge des Abschnitts A voneinander getrennt. Zudem umfasst das Leitungssystem eine zweite Leitungswand, welche die weitere Fluidleitung aussenseitig umschliesst und Haltestege zum Abtrennen von zwei oder mehr Leitungskammern in den Fluidleitungen und zur dreidimensionalen Stabillsation der Fluidleitungen über den Abschnitt A. Dabei ist das Leitungssystem zumindest über dem Abschnitt A als Kunststoff-Hohlprofil ausgebildet und zumindest die Leitungswände sowie die Haltestege des Kunststoff-Hohlprofils sind aus dem gleichen Polymermaterial ausgebildet.

Die erfindungsgemässe Verwendung richtet sich auf solche Leitungssysteme, welche zwischen einem Kraftstoffbehälter bzw. einem Kraftstofftank und einer Brennkraftmaschine bzw. einem Motor eines Kraftfahrzeuges, insbesondere eines Automobils, angeordnet sind, wobei die Fluidleitungen zumindest eine Leitung umfassen, die ausgewählt ist aus einer Gruppe, die Vorlaufleitungen, Rücklaufteitungen und Entlüftungsleitungen umfasst. Des Weiteren richtet sich die erfindungsgemässe Verwendung auf solche Leitungssysteme, welche als ein zu Kraftstofftanks hinführendes und/oder von diesen wegführendes Kraftstoffleltungssystern ausgebildet ist, wobei die Fluidleitungen zumindest eine Leitung umfassen, die ausgewählt ist aus einer Gruppe, die Transportleitungen, Einfüllleitungen, Zapfleitungen und Entlüftungsleitungen umfasst. Ganz allgemein richtet sich die erfindungsgemässe Verwendung auf Leitungssysteme, die besonders zum Transport von umweltschädlichen, giftigen oder brennbaren Fluiden mit flüchtigen Bestandteilen geeignet sind, weil verhindert wird, dass allenfalls die Wände des Leitungssystems durchdringende Permeate in die Umwelt gelangen können.

Am Beispiel von Kraftstoffleitungssystemen für Benzinmotoren wird im Folgenden die vorliegende Erfindung erläutert. Dieses Beispiel ist stellvertretend für weitere Beispiele, wie Kraftstoffleitungssysteme für Dieselmotoren- oder Brennstoffzellen, Kraftstofftransportleitungen zu erdverlegten oder beweglichen Tankanlagen, Fluidleitungen für explosive Gase oder brennbare Flüssigkeiten und dergleichen gewählt und soll den Umfang der vorliegenden Erfindung keinesfalls schmälern.

In modernen Kraftstoffeinspritzsystemen von Automobilen dient eine Kraftstoffpumpe dazu, den Kraftstoff, also das Benzin oder den Dieselkraftstoff, in der für das jeweilige Einspritzsystem erforderlichen Menge sowie mit dem dafür notwendigen Druck aus dem Kraftstofftank zu den Einspritzventilen oder zur Einspritzpumpe zu befördern. Heutige Kraftstoffpumpen werden zumeist elektrisch angetrieben und befinden sich üblicherweise im Kraftstofftank.

Kraftstoffleitungssysteme für Benzinmotoren bestehen heute vorwiegend aus Kunststoffrohren. Der Druck in solchen Kraftstoffleitungssystemen beträgt typischerweise bis zu 4.5 bar in der Vorlaufleitung, welche von der Kraftstoffpumpe im Benzintank zum Motor führt und bis zu 0.5 bar in der Rücklaufleitung, welche überschüssigen unverbrauchten Kraftstoff vom Motor zum Benzintank zurückführt. Die Innendurchmesser solcher Vorlaufleitungen betragen etwa 3 bis 12 mm bei einer Wandstärke von 1 bis 1.5 mm. Die Innendurchmesser solcher Rücklaufleitungen betragen etwa 6 bis 18 mm bei einer Wandstärke von 1.5 bis 2.0 mm. Ebenso können Leckage-Sammelleitungen mit Durchmessern von 3 bis 6 mm und Wandstärken von 0.8 bis 1.5 mm so ausgeführt werden. Aus dem Stand der Technik bekannte Kraftstoffleitungssysteme umfassen zudem Entlüftungsleitungen zum Abführen oder Sammeln von Benzingasen oder Benzindämpfen und möglichen Benzinkondensaten bei einem Druck von höchstens 0.2 bar (vgl. "NONMETALLIC FUEL SYSTEM TUBING WITH ONE OR MORE LAYERS" in: PRELIMINARY COPY OF THE FINAL DRAFT OF THE STANDARD AS SUBMITTED FOR RECOGNITION AS AN AMERICAN NATIONAL STANDARD; Ausgabe November 1996). Solche Entlüftungsleitungen verbinden zumeist das Entlüftungssystem des Benzintanks bzw. den Aktivkohlefliter über eine Regenerlerleitung mit dem Ansaugtrakt des Motors. Die mit dem Ansaugsystem des Verbrennungsmotors eines Automobils verbundene Entlüftungsleitung sammelt die im Benzintank angesammelten Dämpfe und führt diese durch die Entlüftungsleitungen entweder dem Ansaugtrakt des Motors zu (wenn der Motor läuft), oder sonst zum Aktivkohlefilter zur Zwischenspeicherung. Letzterer Fall tritt vor allem auf, wenn das Fahrzeug längere Zeit nicht benutzt wird und insbesondere dann, wenn die Erwärmung des Fahrzeuges durch z. B. Sonneneinstrahlung eine Permeation des Kraftstoffs durch die Leitungen begünstigt. Wird das Fahrzeug wieder in Betrieb genommen (d.h. der Motor wieder gestartet), so wird der Aktivkohlefilter mit der vom Motor angesaugten Frischluft regeneriert. Die dabei frei werdenden Benzindämpfe werden über die Regenerationsleitung zum Ansaugbereich des Motors geleitet, wo sie mit dem Kraftstoff/Luftgemisch vermengt und dem Motor zur Verbrennung zugeführt werden.

Die erfindungsgemässe Verwendung richtet sich auch auf Kraftstoffleitungssysteme für Brennkraftmaschinen, welche keine Rücklaufleitung aufweisen, d.h. Kraftstoffleitungssysteme, welche nur eine Vorlaufleitung für den Kraftstoff und eine Entlüftungsleitung für die Kraftstoffdämpfe umfassen.

Die erwähnten Druckwerte werden auch von europäischen Firmen in etwa eingehalten, so geht aus den Produktspezifikationen von RENAULT (Nr. 34-04-892/--C; Normalisation Renault Automobiles, Service 65810, Section Normes et Cahiers des Charges, RENAULT 2000) hervor, dass die Vorlaufleitungen bei einem Druck von 3.5 bar, die Rücklaufleitungen und Entlüftungsleitungen bei einem Druck von 0.5 bar betrieben werden.

Diese Kunststoffrohre zur Leitung von Kraftstoffen umfassen üblicherweise eine Sperrschicht oder mehrere Sperrschichten aus einem speziellen Barrierematerial (z.B. aus einem Fluorpolymer), welches die Permeation des in diesem Rohr geförderten Kraftstoffes durch die Rohrwand und damit allfällige Kraftstoff-Emisslonen an die Umwelt begrenzen. Ein wesentlicher Nachteil der aus dem Stand der Technik bekannten Kraftstoffleitungssysteme liegt in der oft komplexen Mehrschichtstruktur der verwendeten Leitungen mit zum Teil kostspieligen Polymeren. Es besteht zudem die Schwierigkeit, verschiedenartige Polymerschichten (oft mittels Haftvermittlungsschichten) untereinander zu einer guten Haftung zu bringen, um ein Delaminieren der Polymerschichten zu verhindern. Trotz Verwendung von solchen Sperrschichten kann jedoch eine Kraftstoffpermeation durch die Wände der eingesetzten Kunststoffrohre nicht vollständig verhindert werden, weil auch bei den Barrierekunststoffen immer eine, wenn auch sehr geringe, Diffusion von Kohlenwasserstoffmolekülen durch die Rohrwand stattfindet. Eine solche Kraftstoffpermeation ist vor allem aus der Vorlaufleitung heraus zu beobachten, und wird durch den hier vorherrschenden Druck von mehreren bar noch begünstigt. Zudem tritt beim Ausschalten des Motors von zuvor gefahrenen Fahrzeugen eine temperaturbedingte, erhöhte Permeationsrate (die sogenannte "hot soak" Phase) auf, da die durch den Betrieb der Fahrzeuge stattgefundene Umwälzung des Benzins fehlt, und dadurch lokal höhere Temperaturen auftreten können.

Sogenannte "Common Rail" Einspritzsysteme für Dieselmotoren sind bekannt. Dort werden in der Vorlaufleitung des Kraftstoffleitungssystems wesentlich höhere Drücke von bis zu 1800 bar verwendet. Heute wird sogar an einer Erhöhung des Einspritzdruckes auf 2000 bar und mehr gearbeitet. So offenbaren EP 1 469 188 A1 und EP 1 150 006 A2 solche Diesel-Einspritzsysteme mit einer doppelwandlgen Kraftstoffleitung, welche die Einspritzstellen des "Common Rail" Einspritzsystems untereinander und mit der Hochdruckpumpe verbindet. Dabei fördert eine innere, aus Metall bestehende Hochdruckleitung den Dieseltreibstoff von der Hochdruckpumpe zu den Einspritzdüsen. Eine die Hochdruckleitung umhüllende, ebenfalls metallene Niederdruckleitung dient dem Rückführen von nichtverbrauchtem Treibstoff und hilft das Austreten von Treibstoff bei einem Bersten der Hochdruckleitung zu vermindern. Zudem wird die Niederdruckleitung auf fehlerhafte Druckerhöhungen überwacht, welche auf ein Leck in der Hochdruckleitung schliessen lassen.

Aus DE 296 10 374 ist ebenfalls ein Kraftstoffleitungssystem bekannt, bei welchem die Vorlaufleitung und die Rücklaufleitung gemeinsam ein Doppelrohr bilden, wobei die unter höherem Druck stehende Vorlaufleitung wiederum als Innenrohr innerhalb des die Rücklaufleitung bildenden Aussenrohrs angeordnet ist. Nur die hier vom Aussenrohr gebildete Rücklaufleitung ist gegen Kraftstoff-Diffusion zu sichern, während dies für die von Innenrohr gebildete Vorlaufleitung nicht erforderlich ist, da diese von der Rücklaufleitung umhüllt ist. Hierbei kann das Innenrohr und/oder das Aussenrohr aus einem Metall- oder Kunststoffprofil bestehen. Vorzugsweise weist das aus Kunststoff bestehende Aussenrohr an seiner Innenseite eine Diffusionsbarriere auf.

Aus den Produktspezifikationen von RENAULT ist ebenfalls bekannt, dass die Vorlaufleitungen (bis zu der sich in der unmittelbaren Nähe des Motors befindenden Hochdruckeinspritzpumpe) und die Rücklaufleitungen für Dieselkraftstoff ebenfalls bei einem Druck von 0.5 bar betrieben werden können. Von Dieselmotoren gehen im Allgemeinen keine Entluftungsleitungen ab.

Aus WO 94/10491 sind Kraftstoffleitungssysteme für Brennkraftmaschinen bekannt, welche eine Vorlaufleitung, eine Rücklaufleitung und eine Entlüftungsleitung umfassen. Eine erste Ausführungsform offenbart ein Kraftstoffleltungssystem, welches über eine diesen Leitungen gemeinsame Strecke als einstückiges, sowohl Vorlaufleitung als auch Rücklaufleitung und Entlüftungsleitung umfassendes Kunststoffhohlprofil ausgebildet ist. Nachteilig an dieser Ausführungsform ist die Notwendigkeit, dass für die Entlüftungsleitung immer ein mehrschichtiges Kunststoffrohr verwendet werden muss, damit die Kraftstoff-Emission an die Umwelt reduziert werden kann. Eine zweite Ausführungsform offenbart ein Kraftstoffleitungssystem, bei welchem die Entlüftungsleitung sowohl die Vorlaufleitung als auch die Rücklaufleitung im Bereich einer diesen Leitungen gemeinsamen Strecke zumindest annähernd umschliesst. Nachteilig an dieser Ausführungsform ist, dass dieses Kraftstoffleitungssystem in zumindest zwei Teilen hergestellt und anschliessend ineinander geschoben werden muss, wobei für die Entlüftungsleitung ebenfalls ein mehrschichtiges Kunststoffrohr verwendet wird.

Aus der Patentanmeldung GB 2 290 848 A (beinhaltet auch die Merkmale des Oberbegriffs des Anspruchs 1) ist eine Leitung zum Transportieren von Fluiden, wie Kraftstoff in Motorfahrzeugen bekannt. Dabei transportieren zwei oder mehr konzentrisch ineinander liegende Leitungen den Kraftstoff vom Kraftstofftank zum Motor und auch in umgekehrter Richtung. Die innere Leitung ist durch Längsstege gestützt und auf den äusseren Leitungen ist bevorzugt eine zusätzliche Dichtschicht angeordnet. Im Falle von drei konzentrisch angeordneten Fluidleitungen leitet die äusserste Leitung Kraftstoffdämpfe aus dem Kraftstofftank in einen Gastank und stellt eine wesentliche Reduktion der gesamten Durchlässigkeit der aus einem Kunststoffmaterial extrudierten Mehrfachleitung bereit.

Das Patent US 6,328,074 B1 offenbart ebenfalls eine aus einem Kunststoffmaterial extrudierte Kraftstoffleitung mit integrierter Leckageleitung. Ein inertes Gas wird in diese Leckageleitung gepumpt, so dass allfällig vorhandene Kraftstoffdämpfe zu einem entfernten Leckdetektor geführt und dort nachgewiesen werden können.

Die Aufgabe der vorliegenden Erfindung ist es, eine alternative Verwendung eines Leitungssystems für Fluide mit flüchtigen Bestandteilen vorzuschlagen, welche allfällige Kraftstoff-Verdunstungs-Emissionen an die Umwelt eliminiert oder zumindest auf ein Minimum begrenzt, ohne dass mehrschichtige Kunststoffrohre verwendet werden müssen.

Diese Aufgabe wird gemäss einem ersten Aspekt durch die Merkmale des unabhängigen Anspruchs 1 gelöst, indem eine eingangs beschriebene Verwendung eines Leitungssystems für Fluide mit flüchtigen Bestandteilen vorgeschlagen wird. Die erfindungsgemässe Verwendung ist dadurch gekennzeichnet, dass die weitere Fluidleitung als Spülleitung mit Spülkammern verwendet wird, wobei die Spülleitung an eine Spülvorrichtung oder eine Absaugeinrichtung angeschlossen wird, und wobei aus der zumindest einen Fluidleitung stammende Permeate in der Spülleitung mittels Durchspülen der Spülleitung mit einem Spülfluid oder durch Absaugen wegbefördert werden.

Bevorzugte Weiterbildungen der erfindungsgemässen Verwendung und weitere erfinderische Merkmale ergeben sich aus den abhängigen Ansprüchen.

Die erfindungsgemässe Verwendung umfasst die folgenden Vorteile:
Die mittels Permeation durch die Fluidleitungswände (z.B. aus der Vorlaufleltung, Rücklaufleitung und Entlüftungsleitung) austretenden Benzindämpfe werden in der Spülleitung fortlaufend gesammelt und permanent dem Kraftstoff-(Belüftungs- und) Entlüftungssystem des Fahrzeuges (je nach Betriebszustand dem Ansaugbereich des Motors oder dem Aktivkohlefilter) zugeführt.
• Die Spülleitung kann auch als Entlüftungsleitung oder als Regenerierleitung benutzt werden.
• Falls die Spülleitung des Kunststoff-Hohlprofils permanent durch Unterdruck abgesaugt und/oder mit einer Flüssigkeit und/oder einem Gas durchspült ist, entfällt die Notwendigkeit einer mehrschichtigen Aussenwand.
• Zur Erhöhung der Sicherheit kann die Aussenwand des Kunststoff-Hohlprofils, welche gleichzeitig auch die die Spülleitung einschliessende, zweite Leitungswand ist, mit einer zusätzlichen Barriereschicht versehen sein. Weil die Permeation von Benzindämpfen weitaus geringer ist als die Permeation von flüssigem Benzin, kann diese äusserste Leitung mit geringerem Aufwand bzw. besser gegen eine Permeation von Kraftstoffen durch die Aussenwand abgedichtet werden.
• Die Aussenwand des Kunststoff-Hohlprofils kann zumindest als teilweise gewelltes Rohr ausgebildet sein. Dadurch kann bei gegebenem Durchmesser die Flexibilität des Profils erhöht werden, und die mechanischen Eigenschaften wie z.B. Querdruckfestigkeit des Profils werden verbessert.
• Alle Leitungen sind in ein einziges Kunststoff-Hohlprofil integriert, welches einfach wie eine einzelne Leitung verlegt und am Fahrzeug befestigt werden kann. Dies reduziert einerseits die Montagekosten und Möglichkeit von Anschlussfehlern; andererseits wird die Übersichtlichkeit der montierten Teile verbessert.

Im Folgenden wird die vorliegende Erfindung an Hand von beispielhaften, schematischen Figuren, die den Umfang der Erfindung nur erklären aber nicht einschränken sollen, näher erläutert. Dabei zeigt:
- Fig. 1: ein Schema eines aus dem Stand der Technik bekannten Kraftstoff- leitungssystems bei einem Automobil;
- Fig. 2: ein Schema eines zur erfindungsgemässen Verwendung geeigneten Kraftstoffleitungssystems bei einem Automobil, wobei der Quer- schnitt Fig. 5 entspricht;
- Fig. 3: ein Schema eines zur erfindungsgemässen Verwendung geeigneten Kraftstoffleltungssystems bei einem Automobil, wobei der Quer- schnitt den Fig. 6-9 entspricht;
- Fig. 4: einen biegsamen (Fig. 4A) und einen stabilen (Fig. 4B) Querschnitt durch die einfachste, erste Ausführungsform eines zur erfindungs- gemässen Verwendung geeigneten Leitungssystems;
- Fig. 5: einen biegsamen (Fig. 5A) und einen stabilen (Fig. 5B) Querschnitt durch die Vorlauf- und Rücklaufleitung eines zur erflndungsgemäs- sen Verwendung geeigneten Leitungssystems, gemäss einer zwei- ten, in Fig. 2 dargestellten Ausführungsform;
- Fig. 6: zwei horizontal biegsame (Fig. 6A,6B) Querschnitte durch die Vor- lauf-, Rücklauf- und Entlüftungsleitung eines zur erfindungsgemäs- sen Verwendung geeigneten Leitungssystems, gemäss einer dritten, in Fig. 3 dargestellten Ausführungsform;
- Fig. 7: einen stabilen Querschnitt durch mehrere Vorlauf-, Rücklauf- und Entlüftungsleitungen eines zur erfindungsgemässen Verwendung ge- eigneten Leitungssystems, gemäss einer vierten Ausführungsform;
- Fig. 8: einen stabilen Querschnitt durch die Vorlauf-, Rücklauf- und Entlüf- tungsleitung eines zur erfindungsgemässen Verwendung geeigneten Leitungssystems, gemäss einer fünften Ausführungsform;
- Fig. 9: einen allseitig biegsamen Querschnitt durch die Vorlauf-, Rücklauf- und Entlüftungsleitung eines zur erfindungsgemässenVerwendung geeigneten Leitungssystems, gemäss einer sechsten Ausführungs- form.

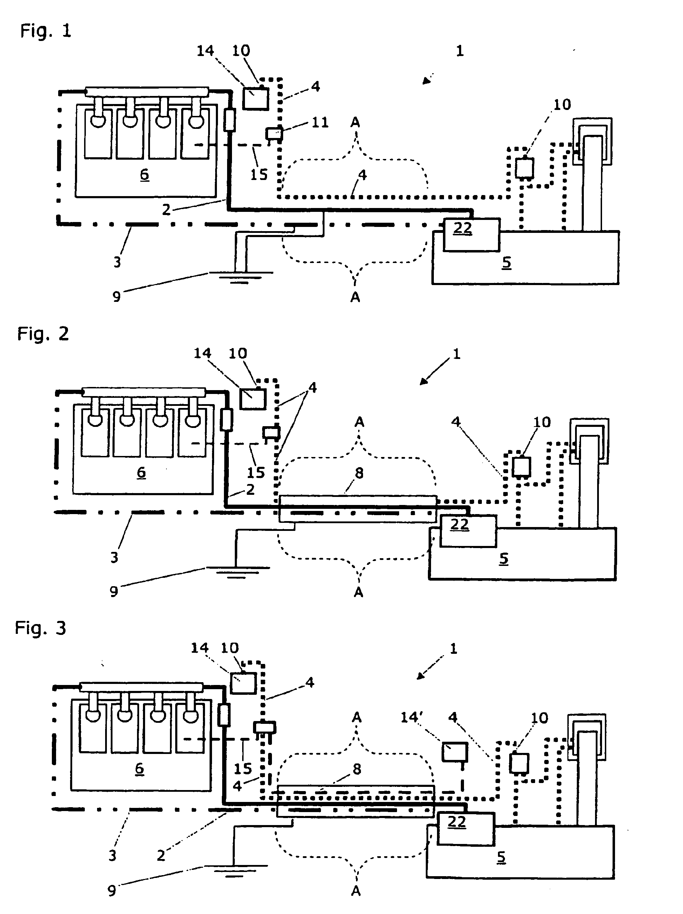

Figur 1 zeigt ein aus dem Stand der Technik bekanntes Kraftstoffleitungssystem bei einem Automobil in einer stark schematisierten Darstellung, welche im Wesentlichen der Figur 1 von WO 94/10491 entspricht. Das Leitungssystem 1 für Fluide mit flüchtigen Bestandteilen ist hier als Kraftstoffleitungssystem ausgebildet, welches zumindest eine Fluidleitung in Form einer Vorlaufleitung 2, einer Rücklaufleitung 3 und einer Entlüftungsleitung 4 mit je einem separaten Einlass 10 und Auslass 11 umfasst. Diese Fluidleitungen 2,3,4 sind jeweils von einer ersten Leitungswand umgeben und erstrecken sich gemeinsam über einen Abschnitt A des Leitungssystems 1 mehr oder weniger eng einander anliegend; sie sind aber zumindest durch die erste Leitungswand über die ganze Länge der Fluidleitungen 2,3,4 voneinander getrennt. Bereits in WO 94/10491 wurde erkannt, dass diese Fluidleitungen 2,3,4 im Abschnitt A in einem Bauteil zusammengefasst werden können, so dass sie über diesem Abschnitt A des Leitungssystems 1 einander eng anliegend erstrecken, aber zumindest durch die erste Leitungswand über die ganze Länge der Fluidleitungen 2,3,4 voneinander getrennt sind.

Die mit dem Ansaugsystem 15 des Verbrennungsmotors 6 des Automobils verbundene Entlüftungsleitung 4 sammelt die im Kraftstoffbehälter 5 angesammelten Dämpfe und führt diese durch die Entlüftungsleitungen 4 entweder zum Ansaugsystem 15 (während der Motor läuft), oder sonst zum Aktivkohlefilter 14 zur Zwischenspeicherung (Adsorption). Nach dem Start und beim Betrieb des Fahrzeuges wird der Aktivkohlefilter 14 mit der vom Motor angesaugten Frischluft regeneriert. Die dabei wieder frei werdenden Benzindämpfe werden über die Regenerationsleitung 15 zum Ansaugbereich des Motors 6 geleitet, wo sie mit dem Kraftstoff/Luftgemisch vermengt und dem Motor zur Verbrennung zugeführt werden. Somit weist die Entlüftungsleitung 4 bzw. das Entlüftungssystem einen oder mehrere Einlässe 10 auf, durch welche Kraftstoffdämpfe in das Entlüftungssystem bzw. die Entlüftungsleitung gelangen können. Zudem weist die Entlüftungsleitung 4 bzw. das Entlüftungssystem einen Auslass 11 auf, durch welchen Kraftstoffdämpfe das Entlüftungssystem verlassen können, ohne in die Umwelt zu gelangen. Dabei fängt der Aktivkohlefilter 14 der am Auslass 11 der Entlüftungsleltung 4 angeordneten Absaugeinrichtung 15 bzw. Regenerierleitung zumindest temporär (insbesondere während Stillstandzeiten des Motors) Kraftstoffdämpfe auf.

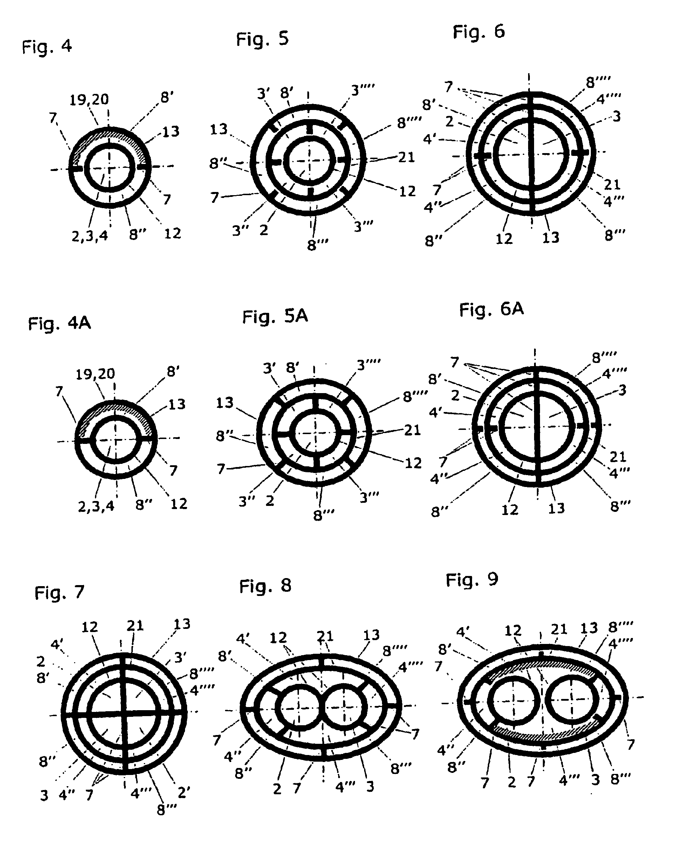

Figur 2 zeigt ein Schema eines beispielhaften, zur erfindungsgemässen Verwendung geeigneten Kraftstoffleitungssystems bei einem Automobil. Das Leitungssystem 1 für Fluide mit flüchtigen Bestandteilen ist hier als Kraftstoffleitungssystem ausgebildet, welches zumindest eine Fluidleitung in Form einer Vorlaufleitung 2, einer Rücklaufleitung 3 und einer Entlüftungsleitung 4 mit je einem separaten Einlass 10 und Auslass 11 umfasst. In diesem Abschnitt A, im wesentlichen zwischen der zumindest teilweise im Kraftstoffbehälter 5 angeordneten Kraftstoffpumpe 22 und der Regenerierleitung 15 erstrecken sich die Vorlaufleitung 2 und die Rücklaufleitung 3 gemeinsam und eng einander anliegend. Die Fluidleitungen 2 und 3 sind aber zumindest durch eine erste Leitungswand 12 voneinander getrennt und um diese beiden Fluidleitungen 2,3 herum ist eine Spülleitung 8 angeordnet (vgl. Figuren 5,5A). Diese Spülleitung 8 ist an deren Enden an das Entlüftungssystem 4 angeschlossen und dient somit im Abschnitt A auch als Entlüftungsleitung.

Figur 3 zeigt ein Schema eines beispielhaften, zur erfindungsgemässen Verwendung geeigneten Kraftstoffleitungssystems bei einem Automobil. Das Leitungssystem 1 für Fluide mit flüchtigen Bestandteilen ist hier als Kraftstoffleitungssystem ausgebildet, welches zumindest eine Fluidleitung in Form einer Vorlaufleitung 2, einer Rücklaufleitung 3 und einer Entlüftungsleitung 4 mit je einem separaten Einlass 10 und Auslass 11 umfasst. In diesem Abschnitt A, im wesentlichen zwischen der zumindest teilweise im Kraftstoffbehälter 5 angeordneten Kraftstoffpumpe 22 und der Regenerierleitung 15 erstrecken sich die Vorlaufleitung 2, die Rücklaufleitung 3 und die Entlüftungsleitung 4 gemeinsam und eng einander anliegend. Die Fluidleitungen 2, 3 und 4 sind aber zumindest durch eine erste Leitungswand 12 voneinander getrennt und um diese drei Fluidleitungen 2,3,4 herum ist eine Spülleitung 8 angeordnet (vgl. Figuren 6-9). Diese Spülleitung 8 ist an deren Enden an einen Aktivkohlefilter 14' bzw. an die Regenerierleitung 15 des Automobils angeschlossen und dient somit im Abschnitt A auch als Regenerierleitung.

Figur 4 zeigt einen Querschnitt durch die einfachste, erste Ausführungsform eines zur erfindungsgemässen Verwendung geeigneten Leitungssystems 1, welches zumindest über den Abschnitt A als Kunststoff-Hohlprofil ausgebildet ist und eine Spülleitung 8 umfasst, die von einer zweiten Leitungswand 13 umgeben ist. Diese Spülleitung 8 umfasst hier zwei Spülkammern 8',8", die durch Haltestege 7 von einander getrennt sind. Die Gesamtheit dieser Spülkammern 8',8" umschliesst die Fluidleitung 2,3,4 im Wesentlichen. Betrachtet man das Volumen der Haltestege 7 als zum Volumen der Spülleitung 8 gehörend, und insbesondere dann (wie in Figur 4A gezeigt), wenn die erste Leitungswand 12 von den Haltestegen 7 getrennt ist, so umschliesst die Spülleitung 8 die Fluidleitung 2,3,4 vollständig. Diese Trennung der Haltestege 7 von der ersten Leitungswand 12 wird insbesondere dann bevorzugt, wenn eine grössere Flexibilität des Kunststoffhohlprofils, beispielsweise zum Thermoformen oder zum Verlegen an einem Automobil, gewünscht wird. Statt gerade und im Wesentlichen parallel zu der Längsachse des Kunststoffhohlprofils können die Haltestege auch spiralförmig verlaufen, sofern das Fertigungsverfahren diese Möglichkeit zulässt.

Die Bezugszeichen 2,3,4 deuten hier an, dass diese Fluidleitung zum Transport von beliebigen Fluiden mit flüchtigen Bestandteilen verwendet werden kann, also z.B. als Vorlaufleitung, Rücklaufleitung oder Entlüftungsleitung in einem Kraftstoffleitungssystem für Brennkraftmaschinen. Diese einfache Fluidleitung 2,3,4 kann aber auch als Transportleitung, Einfüllleitung, Zapfleitung oder Entlüftungsleitung in einem Kraftstoffleitungssystem ausgebildet sein, welches zu einer stationären (z.B. erdverlegten oder ummauerten) oder beweglichen (z.B. auf einem Lastkraftwagen oder Eisenbahnwagen montierten) Tankanlage hin oder von dieser wegführend ausgebildet ist. Immer ist diese einfache Fluidleitung 2,3,4 von einer Spülleitung 8 umgeben, damit die aus den Fluidleitungen 2,3,4 stammenden Permeate durch Absaugen und/oder mit einem Spülfluid wegbefördert werden können. Solch ein Spülfluid kann ein Gas, wie z.B. Luft sein. Ist keine spezielle Flexibilität des Kunststoff-Hohlprofils notwendig, oder wird sogar eine erhöhte Stabilität gewünscht, so wird das Kunststoff-Hohlprofil einstückig hergestellt (vgl. Fig. 4B).

Ist das Permeat explosiv, so kann das Spülfluid auch eine Flüssigkeit (z.B. Wasser) oder ein chemisch inertes Gas (wie z.B. Stickstoffgas) sein. Wichtig ist in Fällen mit nicht inerten Spülfluiden (z.B. Luft), dass das Auftreten einer kritischen Konzentration im Kunststoff-Hohlprofil, zumindest jedoch in der Spülleitung vermieden wird. Vor allem aber sollten kritische oder schädliche Konzentrationen nicht in die Umwelt gelangen. Zur Erläuterung werden im Folgenden Beispiele für Explosionsgrenzen von verschiedenen Stoffen angegeben:

**Tabelle 1**

| Stoff | untere Explosionsgrenze im Gemisch mit Luft [Vol.%] | obere Explosionsgrenze im Gemisch mit Luft [Vol.%] |
|---|---|---|
| Acetylen | 1.5 | 82 |
| Ammoniak | 15 | 28 |
| Benzin | 0.6 | 8 |
| Erdgas | 4.5 | 13.5 |
| Kohlenmonoxid | 12.5 | 75 |
| Methan | 5 | 15 |
| Petroleum | 0.7 | 5 |
| Propan | 2.1 | 9.5 |
| Schwefelkohlenstoff | 1 | 60 |
| Wasserstoff | 4 | 75.6 |

Allgemein gilt: Je größer der Explosionsbereich, desto gefährlicher ist natürlich auch der Umgang mit diesem Stoff. Acetylen ist quasi in jeder Konzentration explosibel (aus der Homepage "Brandlehre" der Freiwilligen Feuerwehr Flensburg-Tarup).

Die Vorrichtung zum Durchspülen oder Absaugen der Spülleitung 8 und damit zum Wegbefördern und Sammeln von aus den Fluidleitungen stammenden Permeaten ist vorzugsweise eine am Auslass 11 der Spülleitung 8 angeschlossene Unterdruck-Quelle oder eine am Einlass 10 der Spülleitung 8 angeschlossene

Überdruck-Quelle. Solche Unterdruckquellen können beispielsweise Saugpumpen (bzw. bei Automobilen der Luftansaugtrakt des Motors) sein. Als Überdruckquellen können z.B. Druckpumpen oder Druckgasflaschen verwendet werden. Im Falle der Verwendung eines solchen Kunststoff-Hohlprofils in einem Automobil, kann vorgesehen sein, dass der Einlass 10 der Spülleitung 8 an eine Adsorbiereinrichtung 14 (z.B. einen Aktivkohlefilter) angeschlossen ist, welche eine am Auslass 11 der Spülleitung 8 angeordnete Absaugeinrichtung 15, z.B. die zum Ansaugtrakt des Motors führende Regenerierleitung, zumindest temporär (insbesondere in Motor-Stillstandzeiten) überbrückt bzw. puffert, um Permeat-Dämpfe aufzufangen.

Besonders bevorzugt wird, dass die Spülleitung 8 des Kunststoff-Hohlprofils permanent durch Anschluss an Unterdruck abgesaugt und/oder mit einer Flüssigkeit und/oder einem Gas durchspült ist. In solchen einfachen Leitungen transportierte Fluide können somit unter anderen die in Tabelle 1 genannten Fluide, aber auch Heizöl und andere Brennstoffe bzw. Dieselöl oder andere Kraftstoffe gefördert werden. Bevorzugt sind fluide Energieträger ausgewählt aus der Gruppe Benzin, Diesel, Ethanol, Methanol, Methan und Wasserstoff. Bei Kraftfahrzeugen können zusätzliche Vorrichtungen, wie Pumpen, Ventilatoren und dergleichen, zum Bewegen der in den Spülleitungen vorhandenen Gase bzw. Dämpfe bei abgestelltem Motor vorgesehen werden.
Figur 5 zeigt einen Querschnitt durch die Vorlauf- und Rücklaufleitung eines zur erfindungsgemässen Verwendung geeigneten Leitungssystems, gemäss einer zweiten Ausführungsform. Es handelt sich auch hier um ein Leitungssystem 1 für Fluide mit flüchtigen Bestandteilen, welches zumindest eine Fluidleitung (hier eine Vorlauf- und Rücklaufleitung 2,3) mit je einem separaten Einlass 10 und Auslass 11 umfasst. Diese Fluidleitungen 2,3 sind von einer ersten Leitungswand 12 umgeben und erstrecken sich - einander eng anliegend - gemeinsam über einen Abschnitt A des Leitungssystems 1. Die beiden Fluidleitungen 2,3 sind zumindest durch die erste Leitungswand 12 über ihre ganze Länge voneinander getrennt. Die beiden Fluidleitungen 2,3 werden von einer Zwischenwand 21 eingehüllt. Der Querschnitt zeigt, dass das Leitungssystem 1 zumindest über den Abschnitt A als Kunststoff-Hohlprofil ausgebildet ist und eine, um die Zwischenwand 21 herum angeordnete Spülleitung 8 umfasst. Diese Spülleitung 8 ist von einer zweiten Leltungswand 13 umgeben und umfasst eine oder mehrere (hier vier) durch Haltestege 7 von einander zumindest teilweise getrennte Spülkammern 8',8",8"',8"". Die Gesamtheit dieser Spülkammern umschliesst im Wesentlichen die Fluidleitungen 2,3. Hier sind je vier Haltestege 7 im Bereich der Rücklaufleitung 3 und im Bereich der Spülleitung 8 eingezeichnet; von diesem Beispiel abweichend können aber auch mehr oder weniger, mindestens aber zwei Haltestege 7 pro Leitung vorgesehen werden. Falls (wie in Figur 5A gezeigt) die erste Leitungswand 12 von den Haltestegen 7 getrennt ist, wird wiederum eine grössere Flexibilität des Kunststoff-Hohlprofils zum Thermoformen oder zum Verlegen an einem Automobil erreicht. Für ausschliesslich gerade Hohlprofile mit erhöhter Festigkeit (z.B. für zu Tankanlagen hin oder von solchen wegführende Leitungen) wird dagegen das Kunststoff-Hohlprofil bevorzugt einstückig hergestellt (vgl. Fig. 5B).

Figur 6 zeigt einen Querschnitt durch die Vorlauf-, Rücklauf- und Entlüftungsleitung eines zur erfindungsgemässen Verwendung geeigneten Leitungssystems, gemäss einer dritten Ausführungsform. Im Unterschied zu der Figur 5 ist hier zusätzlich eine Entlüftungsleitung 4 konzentrisch, d.h. koaxial zu den beiden, gemeinsam mit der ersten Wand 12 einen kreisförmigen Querschnitt bildenden Fluidleitungen angeordnet. Diese Fluidleitungen sind hier als Vorlaufleitung 2 und als Rücklaufleitung 3 bezeichnet und durch einen Haltesteg 7 von einander getrennt. Um diese Fluidleitungen 2,3 herum ist eine aus vier Leitungskammern 4',4",4"',4"" bestehende Entlüftungsleitung 4 angeordnet und mit einer Zwischenwand 21 begrenzt. Alle Fluidleitungen 2,3,4 des Leitungssystems 1, welches zumindest über den Abschnitt A als Kunststoff-Hohlprofil ausgebildet ist und eine Spülleitung 8 umfasst, sind von der Spülleitung 8 bzw. deren durch Haltestege 7 von einander getrennte Spülkammern 8',8",8"',8"" im wesentlichen umschlossen. Wie In Figur 6A gezeigt, kann die erste Leitungswand 12 teilweise von den Haltestegen 7 getrennt sein. Damit wird wiederum eine grössere Flexibilität des Kunststoff-Hohlprofils zum Thermoformen oder zum Verlegen an einem Automobil erreicht. Allerdings ist die Biegbarkeit des Kunststoff-Hohlprofils durch den hier senkrecht gezeichneten Haltesteg 7 um die horizontale Achse eingeschränkt. Um eine Biegbarkeit in Bezug auf die vertikale Achse zu ermöglichen bzw. zu verbessern, werden bevorzugt die horizontal an der Zwischenwand 21 angeordneten Haltestege 7 von der ersten Leitungswand 12 und von der zweiten Leitungswand 13 getrennt (vgl. Fig. 6A). Alternativ können mit dem gleichen Resultat auch die horizontalen Haltestege 7 immer nur mit der jeweils anschliessenden, äusseren Wand verbunden sein. Für ausschliesslich gerade Hohlprofile mit erhöhter Festigkeit (z.B. für zu Tankanlagen hin oder von solchen wegführende Leitungen) wird dagegen das Kunststoff-Hohlprofil bevorzugt einstückig hergestellt (vgl. Fig. 5B).

Figur 7 zeigt einen Querschnitt durch mehrere Vorlauf-, Rücklauf- und Entlüftungsleitungen eines zur erfindungsgemässen Verwendung geeigneten Leitungssystems, gemäss einer vierten Ausführungsform. Im Unterschied zu der Figur 6 sind hier die beiden zentralen Fluidleitungen, Vorlaufleitung 2 und die Rücklaufleitung 3 unterteilt, so dass vier zentrale Fluidleitungen 2,2',3,3' und eine diese umgebende ringförmige Fluidleitung 4 mit Leitungskammern 4',4",4"',4"" entstehen. Die Fluidleitungen 2,2' und 3,3' sind vom der Fluidleitung 4 durch eine Zwischenwand 21 getrennt. Alle Fluidleitungen 2,3,4 des Leitungssystems 1, welches zumindest über den Abschnitt A als einstückiges Kunststoff-Hohlprofil ausgebildet ist und eine Spülleitung 8 umfasst, sind von der Spülleitung 8 bzw. deren durch Haltestege 7 von einander getrennte Spülkammern 8',8",8"',8"" im wesentlichen vollständig umschlossen. Die allseits mit den anschliessenden Wänden verbundenen Haltestege 7 bewirken eine gute Stabilität des Kunststoff-Hohlprofils. Sollte dieses Kunststoff-Hohlprofil eine geplante Endform haben, weiche stark von einer Geraden abweicht, so können entweder die Haltestege 7 mit Abstand zu jeweils einer angrenzenden Wand hergestellt werden (vgl. Fig. 6), damit das ursprünglich gerade extrudierte Hohlprofil nach Wiedererwärmen durch Thermoformen zurechtgebogen werden kann. Alternativ können solche Kunststoff-Hohlprofile jedoch auch einstückig extrudiert oder einstückig blasgeformt bzw. sequentiell blasgeformt oder sequentiell extrudiert und vor dem ersten Erstarren in eine Form gelegt werden, in welcher sie in der gewünschten Endform abkühlen.

Figur 8 zeigt einen Querschnitt durch die Vorlauf-, Rücklauf- und Entlüftungsleitung eines zur erfindungsgemässen Verwendung geeigneten Leitungssystems, gemäss einer fünften Ausführungsform. Im Unterschied zu den Figuren 3 bis 6, in denen die Fluidleitungen 2,3,4 zumindest teilweise koaxial zu der umlaufenden Spülleitung 8 verlaufen, sind hier die beiden zentralen Fluidleitungen 2,3 parallel nebeneinander angeordnet. Diese Fluidleitungen 2,3 umfassend verläuft eine Lüftungsleitung 4, welche ebenfalls durch die Haltestege 7 in vier Leitungskammern 4',4",4"',4"" unterteilt ist. Die Fluidleitungen 2 und 3 sind von der Fluidleitung 4 durch eine Zwischenwand 21 getrennt. Alle Fluidleitungen 2,3,4 des Leitungssystems 1, welches zumindest über den Abschnitt A als einstückiges Kunststoff-Hohlprofil ausgebildet ist und eine Spülleitung 8 umfasst, sind von der Spülleitung 8 bzw. deren durch Haltestege 7 von einander getrennte Spülkammern 8',8",8"',8"" im wesentlichen vollständig umschlossen. Die allseits mit den anschliessenden Wänden verbundenen Haltestege 7 bewirken eine gute Stabilität des Kunststoff-Hohlprofils.

Sollte dieses Kunststoff-Hohlprofil eine geplante Endform haben, welche stark von einer Geraden abweicht, so können die Haltestege 7 mit Abstand zu jeweils einer angrenzenden Wand hergestellt werden (vgl. Fig. 9). Damit das ursprünglich gerade extrudierte Hohlprofil nach Wiedererwärmen (z.B. mit Wasserdampf, mittels Induktion oder mit flexiblen, in die Hohlräume eingeführte Heizdorne aus Metallgeflecht und dergleichen) zurechtgebogen (thermogeformt), erwärmt in eine Form gelegt und dann Erstarren lassen (Abkühlen mit Kühlwasser) werden kann. Alternativ können solche Kunststoff-Hohlprofile jedoch auch einstückig extrudiert oder einstückig blasgeformt und vor dem ersten Erstarren in eine Form gelegt werden, in welcher sie in der gewünschten Endform abkühlen.

Figur 9 zeigt einen Querschnitt durch die Vorlauf-, Rücklauf- und Entlüftungsleitung eines zur erfindungsgemässen Verwendung geeigneten Leitungssystems, gemäss einer sechsten Ausführungsform. Im Unterschied zu der Figur 8, in denen die Fluidleltungen 2,3 direkt aneinander liegen, sind hier die beiden zentralen Fluidleitungen 2,3 voneinander beabstandet und alle Haltestege sind nur mit je einer angrenzenden Wand verbunden.

Die gezeigten Fluidleitungen 2,3,4, mitsamt der ersten und zweiten Leitungswand 12,13 sowie den Haltestegen 7 des Kunststoff-Hohlprofils sind vorzugsweise aus dem gleichen, einschichtigen Polymermaterial ausgebildet. Diese einfache Bauart erlaubt eine kostengünstige Herstellung eines Kunststoff-Hohlprofils mittels Koextrusion oder Blasformen (insbesondere 3D-Basformen) bzw. sequentiellem Blasformen oder sequentiellem Extrudieren.

Es soll nochmals erwähnt werden, dass die Aussenwand der zur erfindungsgemässen Verwendung geeigneten Kunststoff-Hohlprofile auch in zumindest teilweise gewellter Form ausgeführt werden kann, wenn dies z.B. aus Gründen der Biegeflexibilität gewünscht wird.

Es kann vorgesehen sein, dass die Spülleitung 8 zumindest eine zusätzliche Barriereschicht 19 aufweist (vgl. z.B. Fig. 4), welche vorzugsweise auf der Innenoberfläche der zweiten Leitungswand 13 angeordnet ist und ebenfalls durch Koextrusion in das Kunststoff-Hohlprofil eingebracht werden kann. Es kann auch vorgesehen sein, das die Spülleitung 8 zumindest eine zusätzliche Adsorptionsschicht 20 aufweist (vgl. z.B. Fig. 4), welche eingeschüttete Aktivkohle oder koextrudiertes Polyethylen umfasst. Alternativ kann vorgesehen sein, dass eine Fluidleitung - insbesondere eine Entlüftungsleitung 4 in einem Kraftstoffleitungssystem für Brennkraftmaschinen - eine zusätzliche Adsorptionsschicht 20 aufweist (vgl. z.B. Fig. 9), welche eingeschüttete oder sonstwie in den entsprechenden Hohlraum eingeführte (z.B. in einem netzartigen, in das Kunststoff-Hohlprofil eingeführten Textilmaterial eingebettete) Aktivkohle oder koextrudiertes Polyethylen umfasst. Abweichend von der beispielhaften Darstellung in den Figuren 4 und 9 können je nach Bedarf eine oder mehrere Leitungskammern einer Spülleitung 8 oder einer Fluidleitung 4 mit einer Adsorptionsschicht 20 versehen werden.

Für die Herstellung des Kunststoff-Hohlprofils geeignetes Polymermaterial soll zumindest gegenüber dem in den Fluidleitungen 2,3,4 geförderten Fluid beständig sein. Es kann aus ökonomischen Gründen interessant sein, ein Polymermaterial für die Herstellung des Kunststoff-Hohlprofils auszuwählen, welches für die vorgesehenen Fluide sogar begrenzt permeabel ist. Im zweiten Fall wäre allerdings Bedingung, dass die Spülleitung 8 des Kunststoff-Hohlprofils permanent durch Unterdruck abgesaugt und/oder mit einer Flüssigkeit und/oder einem Gas durchspült ist. Das abgesaugte bzw. gespülte Gas kann in einem dafür geeigneten Auffangbehälter, wie z.B. in einem Aktivkohle-Behälter (vgl. auch Fig. 3) aufgefangen, oder z.B. die vom Ansaugtrakt abgesaugten Kohlenwasserstoffdämpfe direkt im Motor als Kraftstoff verbrannt werden. Durch den vorherrschenden Dampf- oder Gasdruck bewegt sich dieses Gas auch ohne zusätzliche Spülung bzw. bei Stillstand des Motors zum Aktivkohlefilter, wie dies bei der Tankblase eines Automobils auch der Fall ist. Dadurch ist ein zur erfindungsgemässen Verwendung geeignetes Kunststoff-Hohlprofil besonders geeignet für Fluide mit hohem Dampfdruck und gegenüber Kunststoff permeierenden Eigenschaften. Somit können in zur erfindungsgemässen Verwendung geeigneten Kunststoff-Hohlprofilen gefahrlos umweltschädliche, giftige oder brennbare Fluide mit flüchtigen Bestandteilen transportiert werden.

Für die Herstellung der zur erfindungsgemässen Verwendung geeigneten Kunststoff-Hohlprofile eignet sich beispielsweise auch das im europäischen Patent EP 0 264 102 offenbarte Verfahren, nach welchem zuerst ein langgestrecktes inneres Kunststoff-Rohr, welches die Fluidleitungen umfasst, extrudiert wird. Dieses innere Rohr wird dann kontinuierlich einer Extrusionsformmaschine mit Querhauptmatrize zugeführt, mit welcher um dieses innere Rohr herum in ebenfalls kontinuierlicher Weise ein langgestrecktes äusseres Kunststoff-Rohr mit mindestens zwei längs verlaufenden, sich mit konstanter Höhe radial nach innen erstreckenden Haltestegen extrudiert wird. In einer nachgeschalteten KalibriermatrizenEinrichtung wird anschliessend das äussere Rohr in noch weichem Zustand zusammengezogen bis die freien Enden der Haltestege des äusseren Rohrs mit der äusseren Umfangsfläche des inneren Rohrs verschmelzen (vgl. Fig. 4B, 5B, 7 und 8). Wird zudem das Innenrohr durch Erwärmen weich gemacht, so kann dem Kunststoff-Hohlprofil gleichzeitig mit dem Aufschmelzen des äusseren Rohrs die endgültige Form für den Einbau, z.B. in ein Automobil, gegeben werden. Derart hergestellte Kunststoff-Hohlprofile umfassen vorzugsweise konzentrisch in der Spülleitung angeordnete Fluidleitungen, wobei der Aussendurchmesser des äusseren Rohrs, bei einer Wandstärke von 0.1 bis 2 mm, 3 bis 20 mm betragen kann. Der Aussendurchmesser des inneren Rohres beträgt dabei, bei einer Wandstärke von 0.05 bis 2 mm, vorzugsweise das 0.2- bis 0.9-fache des Aussendurchmessers des äusseren Rohrs. Die Haltestege weisen bevorzugt eine Dicke von 0.1 bis 1.5 mm auf. Dieses Verfahren eignet sich insbesondere zum Herstellen des Kunststoff-Hohlprofils, wie es in den Figuren 2-5 dargestellt ist; dabei wird bevorzugt immer jeweils eine weitere Hülle auf ein vorextrudiertes Kunststoff-Hohlprofil aufgebracht, so dass für das Kunststoff-Hohlprofil gemäss Figur 2 zwei Arbeitsschritte (wie im europäischen Patent EP 0 264 102 beschrieben), für das Kunststoff-Hohlprofil gemäss den Figuren 3-5 drei Arbeitsschritte notwendig sind. Wird das äussere Rohr nach dem Extrudieren nicht oder nur teilweise zusammengezogen, bleiben die Haltestege nur mit einer angrenzenden Wand verbunden und sind von der anderen angrenzenden Wand immer noch getrennt (vgl. Fig. 4A, 5A, 6A, 6B und 9).

Als Polymermaterial für das Herstellen des zur erfndungsgemässen Verwendung geeigneten Kunststoff-Hohlprofils eignen sich insbesondere Formmassen, die auf der Basis von Polyamiden beruhen. Bevorzugt ist dabei, dass die Polyamide für die Formmasse des Kunststoff-Hohlprofils ausgewählt sind aus einer Gruppe, welche PA 6, PA 9T, PA 46, PA 66, PA 69, PA 610, PA 612, PA 1010, PA 1012, PA 11, PA 12, PA 1212, deren Mischungen und Copolyamide mit diesen Komponenten umfasst.

Ganz besonders geeignet sind auch Polyamid-Formmassen für das Herstellen des Kunststoff-Hohlprofils, welche auf einer Polymermischung aus teilkristallinen aliphatischen Polyamiden und teilaromatischen Polyamiden beruhen. Dabei beträgt der Anteil der aliphatischen Polyamide bevorzugt mehr als 50 Gew.-%, wobei das zahlenmässige Verhältnis der aliphatischen Kohlenstoffatome zu den Amidbindungen in den aliphatischen Polyamiden im Bereich von 8:1 bis 12:1 liegt. Zudem wird bevorzugt, dass die im Unterschuss vorliegenden teilaromatischen Polyamide neben Hexamethylenterephthalamid (6T)-Einheiten weitere tellaromatlsche und/oder aliphatische Amideinheiten aufweisen und überwiegend teilknstallin sind.

Zum Ableiten von elektrostatischen Ladungen aus dem Kunststoff-Hohlprofil, welche z.B. durch die Oberflächenreibung der geförderten Fluide entstehen können, wird das Kunststoff-Hohlprofil bevorzugt elektrisch leitfähig (antistatisch) ausgebildet und elektrisch an ein Erdpotential 9 angeschlossen. Die Leitfähigkeit wird vorzugsweise durch die Zugabe elektrisch leitfähiger Füllstoffe zu der Formmasse, wie z.B. Russ, Kohlefasern, Graphitfibrillen, Graphitpartikel, Nanokohlenstoff-Röhrchen, Metallpulver oder Metallfasern (insbesondere Stahlfasern) in an sich bekannter Art und Weise hergestellt. Stahifasem verhelfen dem Kunststoff-Hohlproftl zudem zu einer erhöhten Wärmeleitfähigkeit.

Weitere an sich bekannte Zusätze für die Polyamidformmasse umfassen Füllstoffe in Form von Schichtsilikaten (Phyllosilikaten), welche den dadurch geschaffenen Nanocomposites - neben den verbesserten mechanischen Eigenschaften - eine verbesserte Barrierewirkung gegen die Permeation von flüchtigen Stoffen verleihen. Das dabei produzierte Material ist eine Polyamid-Formmasse mit einem teilkristallinen Polyamid und einem mineralischen Füllstoff, wobei der mineralische Füllstoff bevorzugt eine ultrafeine Körnung mit einer mittleren Partikelgrösse von maximal 100 nm aufweist. Weil die exfolierten Schichtsilikate beispielsweise bei einem synthetischen Fluorglimmer in Längsrichtung auch 1000 nm Länge aufweisen können, bezieht sich diese Grössenangabe zumindest auf eine Dimension. Unter dem Begriff Polyamid werden Homopolyamide, Copolyamide und Mischungen aus Homopolyamiden und/oder Copolyamiden verstanden. Besonders bevorzugt sind Polyamid-Nanocomposites mit allphatischen Polyamiden und Phyllosillkaten. Dabei sind die Homopolyamide PA 6, PA 66, PA 46 sowie PA 11 und PA 12 bevorzugt. Alternativ sind auch Mischungen aus teilkristallinen Polyamiden mit einem Anteil amorphem Polyamid denkbar; ein Anteil teilkristallines Polyamid ist jedoch In allen zur erfindungsgernässen Verwendung geeigneten Polyamid-Nanocomposites immer vorhanden. Ein bevorzugtes Bespiel für diese Variante ist eine Mischung aus teilkristallinem PA 66 und amorphem PA 6I/6T, das bei der EMS-Chemie AG (CH-7013 Domat/Ems) unter dem Handelsnamen GRIVORY^{®} GV (glasfaserverstärkt) erhältlich ist.

Vorzugsweise kommen organisch modifizierte Phyllosilikate zum Einsatz, besonders bevorzugt solche des Dreischichttyps (2:1), von denen die Polyamid-Formmasse bevorzugt maximal 10 Gew.% umfasst. Zu den Phyllosilikaten (Schichtsfilkaten) des Dreischichttyps (2: 1) zählen Glimmer (z.B. Muskovit, Paragonit, Phologopit, Biotit, Lepidolith, Margarit), Smektite (Montmorillonit, Hectorit) und Vermiculit, wobei Montmorillonit besonders bevorzugt ist. Diese werden bevorzugt in organisch modifizierter Form eingesetzt, damit sie sich in exfolierter Form in der Polyamidmatrix dispergieren lassen und als Nanocomposites ihre maximale Wirkung entfalten.

Bevorzugt weisen die Fluidleitungen 2,3,4 und die Spülleitung 8 an ihrem Einlass 10 und Auslass 11 Leitungsenden 16 auf, welche mit je einem Verbindungselement 17 eines Verbindungssystems 18 verbunden sind. Diese Verbindung soll für das zu leitende Fluid dicht sein und kann durch Schweissen, wie z.B. durch Spiegelschweissen, Rotationsschweissen, Reibschweissen, Vobrationsschweissen, Laserschweissen oder Induktionsschweissen, durch Kleben und/oder Stecken hergestellt werden. Alternativ können die jeweiligen Verbindungselemente 17 an die Leitungsenden 16 der Fluldleitungen 2,3,4 und der Spülleitung 8, z.B. durch Umspritzen, angeformt sein.

Speziell bevorzugt sind Verbindungselemente 17, die als Stecker eines Schnellverbindungssystems, wie es z.B. aus der europäischen Patentschrift EP 0 635 670 bekannt ist, ausgebildet sind. Solche Verbindungselemente 17 sind bevorzugt ebenfalls elektrisch leitend (antistatisch) ausgebildet.

Wahlweise können einzelne oder mehrere (z.B. je zwei sich gegenüber liegende) Leitungskammern 3',3",3"',3"" beliebiger Ausführungsformen als rlchtungsgetrennte und/oder funktionsgetrennte Fluldleitungen eingesetzt werden. So können z.B. in Figur 3 je zwei der Leitungskammern 3',3"' als Rücklaufleitung 3 und je zwei der Leitungskammern 3",3"" als Entlüftungsleitungen 4 eingesetzt werden. Auch kann das Leiten von Kühlwasser in einer der Leitungskammern 3',3",3"',3"" oder in der Spülleitung 8 vorgesehen sein.

Innerhalb des zur erflndungsgemässen Verwendung geeigneten, insbesondere einstücktgen Kunststoff-Hohlprofils kann eine beliebige Anzahl von Fluidleitungen in beliebiger Anordnung und mit beliebiger Flussrichtung vorgesehen werden, solange das Kunststoff-Hohlprofil eine Spülleitung 8 umfasst, die von einer zweiten Leitungswand 13 umgeben ist und die eine oder mehrere durch Haltestege 7 von einander getrennte Spülkammern 8',8" umfasst, deren Gesamtheit die Fluidleitungen 2,3,4 zumindest im wesentlichen umschliesst.

Die Bezugszeichen weisen in den unterschiedlichen Figuren auf jeweils die gleichen oder entsprechenden Elemente hin; dies gilt auch dann, wenn diese Elemente im Text nicht ausdrücklich erwähnt sind.

Die Elemente in den Figuren 4 bis 9 können im Rahmen dieser Erfindung praktisch beliebig miteinander vertauscht werden. Insbesondere die Haltestege 7 können - je nach der gewünschten räumlichen Flexibilität des Kunststoff-Hohlprofils - an bestimmten Stellen mit einer anschliessenden Wand oder mit beiden anschllessenden Wänden verbunden sein. Je nach der gewünschten Verformbarkeit des Kunststoff-Hohlprofils können auch die zusätzlichen Adsorptionsschlchten 20 so angeordnet werden, dass sie das Biegen des Profils in bestimmten Richtungen weniger behindern. Diese Haltestege 7 und/oder Adsorptionsschichten 20 können aber auch zur zusätzlichen dreldimenstanaten Stabillsation eines Kunststoff-Hohlprofils verwendet werden.

## Patentansprüche

1. Verwendung eines Leitungssystems (1) für Fluide mit flüchtigen Bestandteilen, welches Leitungssystem (1) umfasst:
- zumindest eine Fluidleitung die ausgewählt ist aus einer Gruppe, die aus einer Vortauneitung (2) und einer Rücklaufleitung (3) besteht; wobei die zumindest eine Fluidleitung (2,3) je über einen separaten Einlass (10) und Auslass (11) verfügt;
- eine weitere Fluidleitung (8), welche die zumindest eine Fluidleitung (2,3) Im wesentlichen vollständig umschliesst,
wobei sich diese Fluldleitungen (2,3,8) gemeinsam über einen Abschnitt (A) des Leitungssystems (1) einander eng anliegend erstrecken, aber durch eine erste Leitungswand (12) über die ganze Länge des Abschnitts (A) voneinander getrennt sind;
- eine zweite Leitungswand (13), welche die weitere Auldleitung (8) aussenseitig umschliesst;
- Haltestege (7) zum Abtrennen von zwei oder mehr Leitungskammern (2,2';3-3"";8-8"") in den Fluldleitungen (2,3,8) und zur dreidimensionalen Stabillsatlon der Fluidleitungen (2,3,8) über den Abschnitt (A),
wobei das Leitungssystem zumindest über dem Abschnitt (A) als Kunststoff-Hohlprofil ausgebildet ist, und wobei zumindest die Leitungswände (12,13) sowie die Haltestege (7) des Kunststoff-Hohlproflls aus dem gleichen Polymermaterial ausgebildet sind,
**dadurch gekennzeichnet, dass** die weitere Fluidleitung (8) als Spülleitung (8) mit Spülkammern (8',8") verwendet wird, wobei die Spülleitung (8) an eine Spülvorrichtung oder eine Absaugeinrichtung (15) angeschlossen wird, und wobei aus der zumindest einen Fluidleitung (2,3) stammende Permeate in der Spülleitung (8) mittels Durchspülen der Spülleitung (8) mit einem Spülfluld oder durch Absaugen wegbefördert werden.

2. Verwendung eines Leitungssystems nach Anspruch 1, **dadurch gekennzeichnet, dass** die Vorrichtung zum Durchspülen oder Absaugen der Spülleitung (8) mit dem Auslass (11) der Spülleitung (8) an eine Unterdruck-Quelle oder mit dem Einlass (10) der Spülleitung (8) an eine Überdruck-Quelle angeschlossen wird.

3. Verwendung eines Leitungssystems nach Anspruch 1, **dadurch gekennzeichnet, dass** der Einfass (10) der Spülleitung (8) an eine Adsorblereinrichtung (14,14') angeschlossen wird, welche eine am Auslass (11) der Spülleitung (8) angeordnete Absaugeinrichtung (15) zumindest temporär überbrückt bzw. puffert, um Permeat-Dämpfe aufzufangen.

4. Verwendung eines Leitungssystems nach Anspruch 2 oder 3, **dadurch gekennzeichnet, dass** die Spülleitung (8) des Kunststoff-Hohlprofils permanent durch Unterdruck abgesaugt und/oder mit einer Flüssigkeit und/oder einem Gas durchspült wird.

5. Verwendung eines Leitungssystems nach einem der vorhergehenden Ansprüche, **dadurch gekennzeichnet, dass** das Polymermaterial des Kunststoff-Hohlprofils gegenüber dem in den Fluldleitungen (2,3) geförderten Fluid beständig und begrenzt permeabel ist, wobei das verwendete Fluid ausgewählt ist aus einer Gruppe, die Benzin, Diesel, Ethanol, Methanol, Methan und Wasserstoff umfasst.

6. Verwendung eines Leitungssystems (1) nach einem der vorhergehenden Ansprüche, **dadurch gekennzeichnet, dass** das Kunststoff-Hohlprofil als Zuleitung oder Ableitung einer mobilen, erdverlegten oder in ein Gebäude eingebauten Tankanlage für Fluide mit flüchtigen Bestandteilen montiert wird.

7. Verwendung eines Leitungssystems (1) nach einem der vorhergehenden Ansprüche, **dadurch gekennzeichnet, dass** das Kunststoff-Hohlprofil als Kraftstoffleitung zwischen einem Kraftstoffbehälter und einer Brennkraftmaschine, insbesondere zwischen dem Kraftstofftank und dem Motor eines Automobils, montiert wird.

8. Verwendung eines Leitungssystems (1) nach einem der vorhergehenden Ansprüche, **dadurch gekennzeichnet, dass** das Leitungssystem (1) zudem eine Entlüftungsleitung (4) umfasst.

9. Verwendung eines Leitungssystems nach Anspruch 8, **dadurch gekennzeichnet, dass** die Entlüftungsleitung (4) um diese Fluidleitungen (2,3) herum angeordnet und mit einer Zwischenwand (21) begrenzt ist.

10. Verwendung eines Leitungssystems nach Anspruch 8 oder 9, **dadurch gekennzeichnet, dass** die Entlüftungsleitung (4) über einen separaten Einlass (10) und Auslass (11) verfügt und von der Spülleitung (8) über den Abschnitt (A) im Wesentlichen vollständig umschlossen ist.

11. Verwendung eines Leitungssystems nach einem der Ansprüche 8 bis 10, **dadurch gekennzeichnet, dass** die Entlüftungsleitung (4) durch Haltestege (7) in vier Leitungskammern (4',4",4"',4"") unterteilt ist.

12. Verwendung eines Leitungssystems (1) nach einem der vorhergehenden Ansprüche, **dadurch** gekennzelchnet, dass die erste und zweite Leitungswand (12,13) sowie die Haltestege (7) des Kunststoff-Hohlprofils einschichtig ausgebildet sind.

13. Verwendung eines Leitungssystems (1) nach einem der vorhergehenden Ansprüche als ein zu Kraftstofftanks hinführendes und/oder von diesen wegführendes Kraftstoffleitungssystem, wobei die Fluidleitungen (2,3,4) zumindest eine Leitung umfassen, die ausgewählt ist aus einer Gruppe, die Transportleitungen, Einfüllleitungen, Zapfleitungen und Entlüftungsleitungen umfassen.

14. Verwendung eines Leitungssystems (1) nach einem der vorhergehenden Ansprüche, **dadurch gekennzeichnet, dass** das Kunststoff-Hohlprofil mit Fluidleitungen (2,3,4), Spülleitung (8) und Haltestegen (7) ein einstückig extrudiertes oder einstückig blasgeformtes Kunststoff-Hohlprofil ist.

15. Verwendung eines Leitungssystems (1) nach einem der Ansprüche 1 bis 13, **dadurch gekennzeichnet, dass** das Kunststoff-Hohlprofil zusammengesetzt ist aus einer oder mehreren, einstückig vorextrudierten Fluidleitungen (2,3,4) und aus einer, vorzugsweise in einer Extrusionsformmaschine mit Querhauptmatrize, auf die vorextrudierten Fluidleitungen (2,3,4) aufgebrachten, äusseren Spülleitung (8) mit Haltestegen (7), welche im noch warmen Zustand In einer Kalibriermatrizeneinrichtung zusammengezogen worden sind, bis die Haltestege (7) mit der ersten Leltungswand (12) der vorextrudierten Fluidleitungen (2,3,4) verschmolzen sind.

16. Verwendung eines Leitungssystems (1) nach einem der vorhergehenden Ansprüche, **dadurch gekennzeichnet, dass** das Kunststoff-Hohlprofil durch die Zugabe elektrisch leitfähiger Füllstoffe zu der Formmasse, die ausgewählt sind aus einer Gruppe, die Russ, Kohlefasern, Graphitfibrillen, Graphitpartikel, Nanokohlenstoff-Röhrchen, Metallpulver, Metallfasern und Stahlfasern umfasst, elektrisch leitfähig ausgebildet und elektrisch an ein Erdpotential (9) anschliessbar ist.

17. Verwendung eines Leitungssystems (1) nach einem der vorhergehenden Ansprüche, **dadurch** gekennzelchnet, dass die Fluidleitungen (2,3,4) und die Spülleitung (8) an ihrem Einlass (10) und Auslass (11) Leitungsenden (16) aufweisen, welche mit je einem Verbindungselement (17) eines Verbindungssystems (18) verbunden werden.

18. Verwendung eines Leitungssystems (1) nach Anspruch 17, **dadurch** gekennzeichnen, dass die Leitungsenden (16) mit den jeweiligen Verbindungselementen (17) dicht verbunden, vorzugsweise verschweisst oder verklebt sind.

19. Verwendung eines Leitungssystems (1) nach Anspruch 17, **dadurch gekennzeichnet, dass** die jeweiligen Verbindungselemente (17) an die Leitungsenden (16) der Fluldleitungen (2,3,4) und der Spülleitung (8) angeformt sind.

20. Verwendung eines Leitungssystems (1) nach Anspruch 17, **dadurch gekennzeichnet, dass** die Verbindungselemente (17) als Stecker eines Schnellverbindungssystems ausgebildet sind.

21. Verwendung eines Leitungssystems (1) nach einem der Ansprüche 17 bis 20, **dadurch gekennzeichnet, dass** die Verbindungselemente (17) durch die Zugabe elektrisch leitfähiger Füllstoffe zu der Formmasse, die ausgewählt sind aus einer Gruppe, die Russ, Kohlefasern, Graphitfibrillen, Graphitpartikel, Nanokohlenstoff-Röhrchen, Metallpulver, Metallfasern und Stahlfasern umfasst, elektrisch leitend ausgebildet sind.

22. Verwendung eines Leitungssystems (1) nach einem der vorhergehenden Ansprüche, **dadurch gekennzeichnet, dass** das Kunststoff-Hohlprofil auf Formmassen auf der Basis von Polyamiden beruht.

23. Verwendung eines Leitungssystems (1) nach Anspruch 22, **dadurch gekennzeichnet, dass** die Polyamide für die Formmasse des Kunststoff-Hohlprofils ausgewählt sind aus einer Gruppe, welche PA 6, PA 9T, PA 46, PA 66, PA 69, PA 610, PA 612, PA 1010, PA 1012, PA 11, PA 12, PA 1212, deren Mischungen und Copolyamide mit diesen Komponenten umfasst.

24. Verwendung eines Leitungssystems (1) nach Anspruch 22, **dadurch gekennzeichnet, dass** die Polyamid-Formmasse für das Kunststoff-Hohlprofll auf einer Polymermischung aus teilkristallinen aliphatischen Polyamiden und teilaromatischen Polyamiden beruht, wobei der Anteil der aliphatischen Polyamide mehr als 50 Gew.-% beträgt, wobei das zahlenmässige Verhältnis der aliphatischen Kohlenstoffatome zu den Amidbindungen in den aliphatischen Polyamiden im Bereich von 8:1 bis 12:1 liegt, und wobei die im Unterschuss vorliegenden teilaromatischen Polyamide neben Hexamethylenterephthalamid (6T)-Einheiten weitere teilaromatische und/oder aliphatische Amideinheiten aufweisen und überwiegend teilkristallln sind.

25. Verwendung eines Leitungssystems (1) nach einem der Ansprüche 22 bis 24, **dadurch gekennzeichnet, dass** die Formmasse für das Kunststoff-Hohlprofil ein Polyamid-Nanocomposite mit Schichtsilikaten ist.

26. Verwendung eines Leitungssystems (1) nach einem der vorhergehenden Ansprüche, **dadurch gekennzeichnet, dass** die Spülleitung (8) zumindest eine zusätzliche Barriereschicht (19) aufweist.

27. Verwendung eines Leitungssystems (1) nach einem der vorhergehenden Ansprüche, **dadurch gekennzeichnet, dass** die Spülleitung (8) zumindest eine zusätzliche Adsorptionsschicht (20) aufweist.

28. Verwendung eines Leitungssystems (1) nach Anspruch 27, **dadurch gekennzeichnet, dass** die Adsorptionsschicht (20) Aktivkohle oder Polyethylen umfasst.

## Claims

1. A use of a line system (1) for fluids having volatile components, said line system (1) comprising:
- at least one fluid line, which is selected from a group which consists of a supply line (2) and a return line (3); the at least one fluid line (2, 3) having a separate inlet (10) and a separate outlet (11);
- a further fluid line (8), which essentially completely encloses the at least one fluid line (2, 3),
these fluid lines (2, 3, 8) jointly extending close-fitting to one another over a section (A) of the line system (1), but being separated from one another by a first line wall (12) over the entire length of the section (A);
- a second line wall (13), which externally encloses the further fluid line (8);
- retaining webs (7) for separating two or more line chambers (2, 2', 3-3""; 8-8"") in the fluid lines (2, 3, 8) and for three-dimensional stabilization of the fluid lines (2, 3, 8) over the section (A),
the line system being implemented at least over the section (A) as a plastic hollow profile, and at least the line walls (12, 13) and the retaining webs (7) of the plastic hollow profile being implemented from the same polymer material,
**characterized in that** the further fluid line (8) is used as a flushing line (8) having flushing chambers (8', 8"), the flushing line (8) being connected to a flushing device or a suction unit (15), and permeates, which originate from the at least one fluid line (2, 3), being conveyed away in the flushing line (8) by flushing through the flushing line (8) using a flushing fluid or by suctioning.

2. The use of a line system according to Claim 1, **characterized in that** the device for flushing through or suctioning the flushing line (8) is attached to a partial vacuum source using the outlet (11) of the flushing line (8) or to an excess pressure source using the inlet (10) of the flushing line (8).

3. The use of a line system according to Claim 1, **characterized in that** the inlet (10) of the flushing line (8) is connected to an adsorption unit (14, 14'), which at least temporarily bypasses and/or buffers a suction unit (15), which is situated at the outlet (11) of the flushing line (8), in order to capture permeate vapors.

4. The use of a line system according to Claim 2 or 3, **characterized in that** the flushing line (8) of the plastic hollow profile is continuously suctioned by partial vacuum and/or flushed through using a liquid and/or a gas.

5. The use of a line system according to one of the preceding claims, **characterized in that** the polymer material of the plastic hollow profile is resistant and has limited permeability with respect to the fluid conveyed in the fluid lines (2, 3), the employed fluid being selected from a group which comprises gasoline, diesel, ethanol, methanol, methane, and hydrogen.

6. The use of a line system (1) according to one of the preceding claims, **characterized in that** the plastic hollow profile is installed as a supply line or discharge line of a tank farm, which is mobile, buried, or installed in a building, for fluids having volatile components.

7. The use of a line system (1) according to one of the preceding claims, **characterized in that** the plastic hollow profile is installed as a fuel line between a fuel container and an internal combustion engine, in particular between the fuel tank and the engine of an automobile.

8. The use of a line system (1) according to one of the preceding claims, **characterized in that** the line system (1) additionally comprises a venting line (4).

9. The use of a line system according to Claim 8, **characterized in that** the venting line (4) is situated around these fluid lines (2, 3) and is delimited using an intermediate wall (21).

10. The use of a line system according to Claim 8 or 9, **characterized in that** the venting line (4) has a separate inlet (10) and a separate outlet (11) and is essentially completely enclosed by the flushing line (8) over the section (A).

11. The use of a line system according to one of Claims 8 through 10, **characterized in that** the venting line (4) is divided by retaining webs (7) into four line chambers (4', 4", 4"', 4"").

12. The use of a line system (1) according to one of the preceding claims, **characterized in that** the first and second line walls (12, 13) and the retaining webs (7) of the plastic hollow profile are implemented as single layer.

13. The use of a line system (1) according to one of the preceding claims as a fuel line system leading to fuel tanks and/or away therefrom, the fluid lines (2, 3, 4) comprising at least one line, which is selected from a group which comprises transport lines, filling lines, bleed lines, and venting lines.

14. The use of a line system (1) according to one of the preceding claims, **characterized in that** the plastic hollow profile having fluid lines (2, 3, 4), flushing line (8), and retaining webs (7) is a one-piece extruded or one-piece blow-molded plastic profile.

15. The use of a line system (1) according to one of Claims 1 to 13, **characterized in that** the plastic hollow profile is composed of one or more one-piece pre-extruded fluid lines (2, 3, 4) and one external flushing line (8), which is preferably applied in an extrusion molding machine having a transverse main matrix to the pre-extruded fluid lines (2, 3, 4), and which has retaining webs (7), which have been contracted in the still hot state in a calibration matrix unit until the retaining webs (7) are fused with the first line wall (12) of the pre-extruded fluid lines (2, 3, 4).

16. The use of a line system (1) according to one of the preceding claims, **characterized in that** the plastic hollow profile is implemented as electrically conductive by adding electrically conductive fillers to the molding compound, which are selected from a group which comprises carbon black, carbon fibers, graphite fibrils, graphite particles, carbon nanotubes, metal powders, metal fibers, and steel fibers, and is electrically connectable to a ground potential (9).

17. The use of a line system (1) according to one of the preceding claims, **characterized in that** the fluid lines (2, 3, 4) and the flushing line (8) have line ends (16) at their inlet (10) and outlet (11), which are each connected to a connection element (17) of a connection system (18).

18. The use of a line system (1) according to Claim 17, **characterized in that** the line ends (16) are tightly connected to the particular connection elements (17), preferably welded or glued.

19. The use of a line system (1) according to Claim 17, **characterized in that** the respective connection elements (17) are molded onto the line ends (16) of the fluid lines (2, 3, 4) and the flushing line (8).

20. The use of a line system (1) according to Claim 17, **characterized in that** the connection elements (17) are implemented as plugs of a quick connection system.

21. The use of a line system (1) according to one of Claims 17 through 20, **characterized in that** the connection elements (17) are implemented as electrically conductive by adding electrically conductive fillers to the molding compound, which are selected from a group which comprises carbon black, carbon fibers, graphite fibrils, graphite particles, carbon nanotubes, metal powders, metal fibers, and steel fibers.

22. The use of a line system (1) according to one of the preceding claims, **characterized in that** the plastic hollow profile is based on molding compounds based on polyamides.

23. The use of a line system (1) according to Claim 22, **characterized in that** the polyamides for the molding compound of the plastic hollow profile are selected from a group which comprises PA 6, PA 9T, PA 46, PA 66, PA 69, PA 610, PA 612, PA 1010, PA 1012, PA 11, PA 12, PA 1212, their mixtures and copolyamides having these components.

24. The use of a line system (1) according to Claim 22, **characterized in that** the polyamide molding compound for the plastic hollow profile is based on a polymer mixture made of partially-crystalline aliphatic polyamides and partially-aromatic polyamides, the proportion of the aliphatic polyamides being greater than 50 wt.-%, the numeric ratio of the aliphatic carbon atoms to the amide bonds in the aliphatic polyamides being in the range from 8:1 to 12:1, and the partially-aromatic polyamides, which are provided in shortage, having further partially-aromatic and/or aliphatic amide units in addition to hexamethylene terephthalamide (6T) units and being predominantly partially crystalline.

25. The use of a line system (1) according to one of Claims 22 through 24, **characterized in that** the molding compound for the plastic hollow profile is a polyamide nanocomposite having layered silicates.

26. The use of a line system (1) according to one of the preceding claims, **characterized in that** the flushing line (8) has at least one additional barrier layer (19).

27. The use of a line system (1) according to one of the preceding claims, **characterized in that** the flushing line (8) has at least one additional adsorption layer (20).

28. The use of a line system (1) according to Claim 27, **characterized in that** the adsorption layer (20) comprises activated carbon or polyethylene.

## Revendications

1. Utilisation d'un système de conduites (1) pour fluides à composants volatils, lequel système de conduites (1) comprend :
- au moins une conduite de fluide qui est sélectionnée parmi un groupe qui consiste en une conduite d'avance (2) et d'une conduite de retour (3) ; où la conduite de fluide (2, 3), au moins au nombre de une, dispose respectivement d'une entrée (10) et d'une sortie (11) séparées ;
- une autre conduite de fluide (8) qui entoure essentiellement entièrement ladite conduite de fluide (2, 3), au moins au nombre de une ;
où ces conduites de fluide (2, 3, 8) s'étendent conjointement sur un segment (A) du système de conduites (1) en se trouvant étroitement adjacentes, mais en étant séparées les unes des autres sur toute la longueur du segment (A) par une première paroi de conduite (12) ;
- une seconde paroi de conduite (13) qui entoure l'autre conduite de fluide (8) côté extérieur ;
- des tiges de retenue (7) permettant la séparation de deux chambres de conduites ou plus (2, 2' : 3-3"" ; 8-8"") dans les conduites de fluides (2, 3, 8) et la stabilisation tridimensionnelle des conduites de fluide (2, 3, 8) sur le segment (A),
où le système de conduites est exécuté au moins sur le segment (A) en tant que profilé creux en matière plastique, et où au moins les parois de conduite (12, 13) et les tiges de retenue (7) du profilé creux en matière plastique sont exécutés du même matériau polymère, **caractérisée en ce que** l'autre conduite de fluide (8) est utilisée en tant que conduite de rinçage (8) ayant des chambres de rinçage (8', 8"), la conduite de rinçage (8) étant raccordée à un dispositif de rinçage ou à un dispositif d'aspiration (15), et où les perméats provenant de la conduite de fluide (2, 3), au moins au nombre de une, sont transportés dans la conduite de rinçage (8) au moyen d'un rinçage de la conduite de rinçage (8) avec un fluide de rinçage ou par aspiration.

2. Utilisation d'un système de conduites selon la revendication 1, **caractérisée en ce que** le dispositif de rinçage ou d'aspiration de la conduite de rinçage (8) est raccordé par la sortie (11) de la conduite de rinçage (8) à une source de dépressurisation ou par l'entrée (10) de la conduite de rinçage (8) à une source de surpression.

3. Utilisation d'un système de conduites selon la revendication 1, **caractérisée en ce que** l'entrée (10) de la conduite de rinçage (8) est raccordée à un dispositif d'adsorption (14, 14') qui ponte ou tamponne au moins temporairement un dispositif d'aspiration (15) disposé au niveau d'une sortie (11) de la conduite de rinçage (8) pour capter les vapeurs de perméat.

4. Utilisation d'un système de conduites selon la revendication 2 ou 3, **caractérisé en ce que** la conduite de rinçage (8) du profilé creux en matière plastique est aspirée en permanence par dépressurisation et/ou rincée par un fluide et/ou un gaz.

5. Utilisation d'un système de conduites selon l'une des revendications précédentes, **caractérisée en ce que** le matériau polymère du profilé creux en matière plastique est résistant et perméable de façon limitée vis-à-vis du fluide transporté dans les conduites de fluide (2, 3), le fluide utilisé étant sélectionné dans un groupe qui comprend de l'essence, du diesel, de l'éthanol, du méthanol, du méthane et de l'hydrogène.

6. Utilisation d'un système de conduites (1) selon l'une des revendications précédentes, **caractérisée en ce que** le profilé creux en matière plastique est monté en tant que conduite d'amenée ou conduite de décharge d'une installation de réservoir, mobile, enterrée ou insérée dans un bâtiment, de fluides à composants volatils.

7. Utilisation d'un système de conduites (1) selon l'une des revendications précédentes, **caractérisée en ce que** le profilé creux en matière plastique est monté en tant que conduite de carburant entre un réservoir de carburant et un moteur à combustion interne, en particulier entre le réservoir de carburant et le moteur d'une automobile.

8. Utilisation d'un système de conduites (1) selon l'une des revendications précédentes, **caractérisée en ce que** le système de conduites (1) comprend en outre une conduite de ventilation (4).

9. Utilisation d'un système de conduites selon la revendication 8, **caractérisée en ce que** la conduite de ventilation (4) est disposée autour de ces conduites de fluide (2, 3) et est délimitée par une paroi intermédiaire (21).

10. Utilisation d'un système de conduites selon la revendication 8 ou 9, **caractérisée en ce que** la conduite de ventilation (4) dispose d'une entrée (10) et d'une sortie (11) séparées et est entourée essentiellement entièrement par la conduite de rinçage (8) sur le segment (A).

11. Utilisation d'un système de conduites selon l'une des revendications 8 à 10, **caractérisée en ce que** la conduite de ventilation (4) est subdivisée en quatre chambres de conduite (4', 4", 4"', 4"") par des tiges de retenue (7).

12. Utilisation d'un système de conduites (1) selon l'une des revendications précédentes, **caractérisée en ce que** la première et la seconde parois de séparation (12, 13) ainsi que les tiges de retenue (7) du profilé creux en matière plastique sont exécutés en couche unique.

13. Utilisation d'un système de conduites (1) selon l'une des revendications précédentes en tant que système de conduites de carburant allant vers un réservoir de carburant et/ou partant de celui-ci, où les conduites de fluide (2, 3, 4) comprennes au moins une conduite qui est sélectionnée dans un groupe qui comprend des conduites de transport, des conduites d'admission, des conduites de distribution et des conduites de ventilation.

14. Utilisation d'un système de conduites (1) selon l'une des revendications précédentes, **caractérisée en ce que** le profilé creux en matière plastique, avec les conduites de fluide (2, 3, 4), la conduite de rinçage (8) et les tiges de retenue (7), est un profilé creux en matière plastique extrudé d'une pièce ou moulé par soufflage d'une pièce.

15. Utilisation d'un système de conduites (1) selon l'une des revendications 1 à 13, **caractérisée en ce que** le profilé creux en matière plastique se compose d'une ou de plusieurs conduites de fluide d'une pièce pré-extrudées (2, 3, 4) et d'une conduite de rinçage externe (8), de préférence appliquée dans une machine de formage par d'extrusion avec une matrice à traverse mobile, sur les conduites de fluide (2, 3, 4) pré-extrudées, avec des tiges de retenue (7), qui ont été étirées à l'état encore chaud dans un dispositif à matrice de calibrage jusqu'à ce que les tiges de retenue (7) soit fondues avec la première paroi de séparation (12) des conduites de fluide pré-extrudées (2, 3, 4).

16. Utilisation d'un système de conduites (1) selon l'une des revendications précédentes, **caractérisée en ce que** le profilé creux en matière plastique est exécuté de façon électriquement conductrice, par l'ajout à la masse de moulage de matières de charges électriquement conductrices, qui sont sélectionnées dans un groupe qui comprend de suie, de fibres de carbone, de fibrilles de graphite, de particules de graphite, de nanotubes de carbone, de poudre métallique, de fibres métalliques et de fibres d'acier, et est raccordé électriquement au potentiel terrestre (9).

17. Utilisation d'un système de conduites (1) selon l'une des revendications précédentes, **caractérisée en ce que** les conduites de fluide (2, 3, 4) et la conduite de rinçage (8) présentent au niveau de leur entrée (10) et de leur sortie (11) des extrémités de conduite (16) qui sont reliées respectivement à un élément de liaison (17) d'un système de liaison (18).

18. Utilisation d'un système de conduites (1) selon la revendication 17, **caractérisée en ce que** les extrémités de conduite (16) sont reliées de façon étanche aux éléments de liaison respectifs (17), et sont de préférence soudés ou collés.

19. Utilisation d'un système de conduites (1) selon la revendication 17, **caractérisée en ce que** les éléments de liaison respectifs (17) sont façonnés au niveau des extrémités de conduite (16) des conduites de fluide (2, 3, 4) et de la conduite de rinçage (8).

20. Utilisation d'un système de conduites (1) selon la revendication 17, **caractérisée en ce que** les éléments de liaison (17) sont exécutés en tant que prises d'un système de raccord rapide.

21. Utilisation d'un système de conduites (1) selon l'une des revendications 17 à 20, **caractérisée en ce que** les éléments de liaison (17) sont exécutés de façon électriquement conductrice par l'ajout à la masse de moulage de matières de charge électriquement conductrices, qui sont sélectionnées dans un groupe qui comprend de suie, de fibres de carbone, de fibrilles de graphite, de particules de graphite, de nanotubes de carbone, de poudre métallique, de fibres métalliques et de fibres d'acier.

22. Utilisation d'un système de conduites (1) selon l'une des revendications précédentes, **caractérisée en ce que** le profilé creux en matière plastique repose sur des masses de moulage à base de polyamides.

23. Utilisation d'un système de conduites (1) selon la revendication 22, **caractérisée en ce que** les polyamides pour la masse de moulage du profilé creux en matière plastique sont sélectionnés dans un groupe qui comprend PA 6, PA 9T, PA 46, PA 66, PA 69, PA 610, PA 612, PA 1010, PA 1012, PA 11, PA 12, PA 1212, leurs mélanges et des copolyamides de ces composants.

24. Utilisation d'un système de conduites (1) selon la revendication 22, **caractérisée en ce que** la masse de moulage de polyamide pour le profilé creux en matière plastique repose sur un mélange polymère composé de polyamides aliphatiques semi-cristallins et de polyamides semi-aromatiques, où la fraction des polyamides aliphatiques est supérieure à 50 % en poids, où le rapport massique entre les atomes de carbone aliphatiques et les liaisons amide dans les polyamides aliphatiques est compris dans la plage de 8:1 à 12: 1, et où les polyamides semi-aromatiques présents de façon déficitaire présentent en plus des entités téréphtalamide d'héxaméthylène (6T) d'autres entités amide semi-aromatiques et/ou aliphatiques et sont essentiellement semi-cristallins.

25. Utilisation d'un système de conduites (1) selon l'une des revendications 22 à 24, **caractérisée en ce que** la masse de moulage pour le profilé creux en matière plastique est un nanocomposite de polyamide présentant des silicates en feuillets.

26. Utilisation d'un système de conduites (1) selon l'une des revendications précédentes, **caractérisée en ce que** la conduite de rinçage (8) présente au moins une couche barrière supplémentaire (19).

27. Utilisation d'un système de conduites (1) selon l'une des revendications précédentes, **caractérisée en ce que** la conduite de rinçage (8) présente au moins une couche d'adsorption supplémentaire (20).

28. Utilisation d'un système de conduites (1) selon la revendication 27, **caractérisée en ce que** la couche d'adsorption (20) comporte du charbon actif ou du polyéthylène.
